# EUROPEAN PATENT SPECIFICATION

(11) **EP 1 884 952 B1**
(45) Date of publication and mention of the grant of the patent: **16.03.2011**
(21) Application number: 07014143.7
(22) Date of filing: 19.07.2007
(51) Int. Cl.: G11B 33/08, G11B 33/14, G11B 23/02, G06F 1/18

(54) **Buffer member**
Pufferelement
Élément de tampon

(30) Priority: 25.07.2006 JP 2006202423
(43) Date of publication of application: 06.02.2008
(73) Proprietor: POLYMATECH CO., LTD., Chuo-Ku, Tokyo (JP)
(72) Inventor: Yamaguchi, Kenji, c/o R&D Ctr of Polymatech Co., Ltd., Tokyo (JP)
(74) Representative: Lorenz, Markus

(56) References cited:
- JP-A- 2001 130 643
- US-A- 5 161 770
- US-B1- 6 233 140

## Description

### BACKGROUND OF THE INVENTION

### 1. Field of the Invention

The present invention relates to a buffer member which protects from a shock, vibration, etc. an external storage device such as a hard disk drive accommodated in an information processing apparatus including a notebook type personal computer, a car audio apparatus, a car navigation apparatus, a portable audio player, or a digital video camera.

### 2. Description of the Related Art

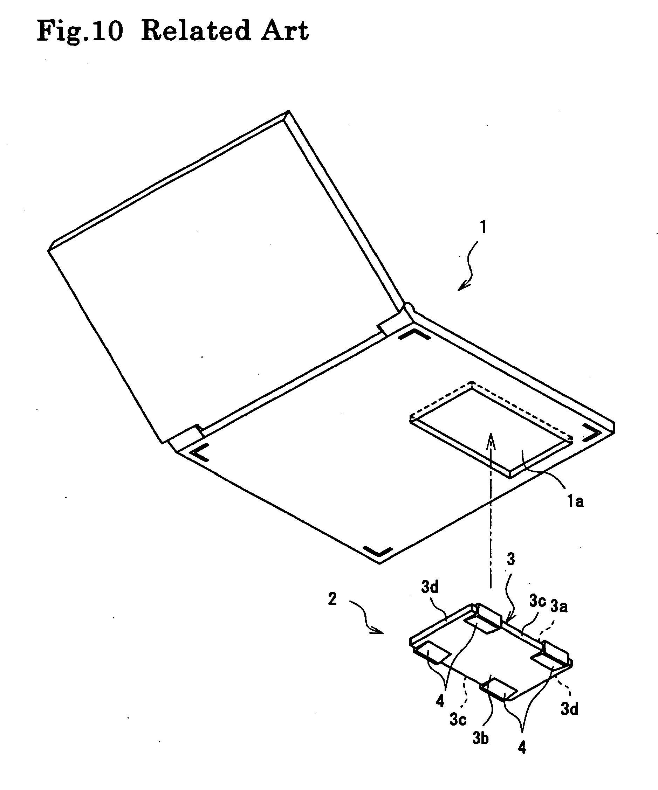

As shown in Fig. 10, a hard disk drive 2 serving as an external storage device accommodating a disk-shaped storage medium is accommodated in an accommodating portion 1a of a notebook type personal computer (hereinafter referred to as "notebook PC") serving as an information processing apparatus. As disclosed in JP 2005-38538 A, the hard disk drive 2 is, for example, provided with a box-shaped casing 3 with an upper surface 3a and a bottom surface 3b that are substantially rectangular, with buffer members 4 formed of a soft rubber-like elastic material being attached to longitudinal side surfaces 3c of the casing 3.

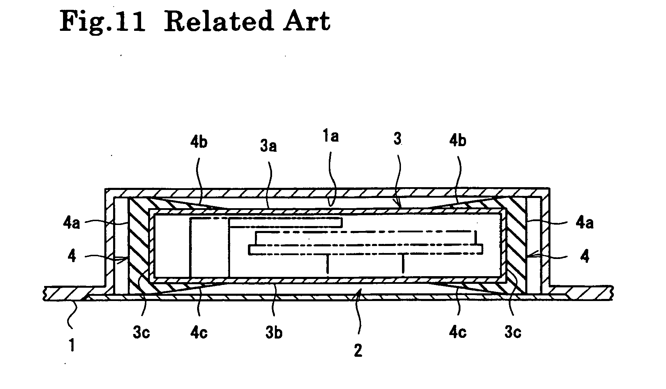

As shown in Fig. 11, the buffer members 4 have side surface support portions 4a protecting the longitudinal side surfaces 3c of the casing 3 of the hard disk drive 2, and the upper and lower ends of the side surface support portions 4a protrude upwards and downwards beyond the surface ends of the upper surface 3a and the bottom surface 3b of the casing 3, respectively . Further, the buffer members 4 have upper surface support portions 4b protruding in a cantilever-like fashion from the side surface support portions 4a so as to cover the corner portions defined by the longitudinal side surfaces 3c and the upper surface 3a, and bottom surface support portions 4c protruding in a cantilever-like fashion from the side surface support portions 4a so as to cover the corner portions defined by the longitudinal side surfaces 3c and the bottom surface 3b.

Such an information processing apparatus has a problem in that a malfunction occurs as the operational frequency increases due to electromagnetic wave noise, charging with static electricity, etc. In view of this, as disclosed, for example, in JP 2001-130643 A, a known technique is available according to which the accommodating portion of the notebook PC is provided with a conductive contact member held in contact with the casing of the hard disk drive. Further, as disclosed, for example, in JP 2005-222583 A, a technique is known according to which a conductive member (conduction gasket) formed by providing a mesh-like conductor on the surface of a core member formed of a foam resin is mounted between the accommodating portion and the hard disk drive, establishing electrical connection therebetween.

However, in the technique in which the conductive contact member is provided, the contact member of the accommodating portion and the casing of the hard disk drive are separated from each other upon a shock or vibration, resulting in rather unstable electrical connection. The technique in which the conductive member is mounted involves an increase in the number of components, resulting in a complicated incorporation of the hard disk drive into the accommodating portion.
A buffer member according to the preamble of claims 1, 2 and 3 is described in US 5,161,770 A.

### SUMMARY OF THE INVENTION

The present invention has been made in view of the above-mentioned problems in the prior art. It is accordingly an object of the present invention to provide a buffer member that helps to establish stable electrical connection between the casing of an external storage device such as a hard disk drive, and the accommodating portion without involving an increase in the number of components.

In order to achieve the above-mentioned object, the present invention is characterized in what is stated in claim 1, claim 2 or claim 3.

In the present invention, there is provided a conductive connection layer held in contact with the conductive portion of the external storage device and the conductive portion of the accommodating portion, so it is possible to dissipate static electricity with which the external storage device is charged and electromagnetic wave noise to the accommodating portion or the casing of the information processing apparatus electrically continuous with the accommodating portion through the conductive connection layer. Thus, it is possible to prevent malfunction of the external storage device.

Further, since the conductive connection layer is provided on the surface of the buffer member main body, there is no need to separately provide a conductive member, thereby preventing an increase in the number of components. Thus, the external storage device can be easily incorporated into the accommodating portion.

The buffer member elastically supports the external storage device within the accommodating portion, so if the external storage device is displaced within the accommodating portion upon receiving a vibration or shock, the buffer member is kept in contact with both the accommodating portion and the external storage device. Thus, the conductive connection layer provided on the surface of the buffer member main body can always be electrically connected to the conductive portion of the accommodating portion and the conductive portion of the external storage device. Thus, stable electrical connection is possible even when a vibration or shock is received.

In the buffer member of the present invention, at least one of the upper surface support portion, the side surface support portion, and the bottom surface support portion of the buffer member main body has a through-hole extending through the thickness thereof, so when compressed upon receiving a vibration or shock, the buffer member main body can be deformed so as to crush the through-hole. Thus, in addition to the buffer effect due to compression, it is also possible to exert a buffer effect due to deformation, thereby enhancing the buffer effect.

Further, by providing the conductive connection layer on the wall surface of the through-hole, a conduction path connecting the conductive portion of the external storage portion and the conductive portion of the accommodating portion is shortened, thereby achieving a reduction in conduction resistance. Thus, static electricity with which the external storage device is charged and electromagnetic wave noise can be easily dissipated. Further, by providing a plurality of through-holes, it is possible to provide many conduction paths, so defective conduction due to lack of the conductive connection layer does not easily occur. Thus, it is possible to enhance the reliability in electrical connection between the external storage device and the accommodating portion.

In the buffer member of the present invention, the buffer member main body can have an upper surface support portion, a side surface support portion, and a bottom surface support portion elastically supporting the upper surface side, the side surface side, and the bottom surface side of the external storage device, respectively, and exhibits a U-shaped sectional configuration. Thus, by fitting its opening into the box-shaped external storage device from the side surface side thereof, the buffer member can be mounted to the external storage device easily and reliably.

In the buffer member with the through-hole of the present invention, a hole edge of the through-hole is beveled. It is difficult to form a conductive connection layer of a uniform thickness at the hole edge of a right angle or an acute angle, and such a conductive connection layer is liable to lead to unstable conduction or to suffer breakage with deformation of the buffer member main body. According to the present invention, however, the hole edge is beveled, so a conductive connection layer of a uniform thickness can be easily formed. Thus, the conduction through the conductive connection layer is stabilized, and the conductive connection layer does not easily suffer breakage even if the buffer member main body is deformed, making it possible to realize reliable electrical connection. In the present invention, the "beveled configuration" as mentioned above and below is a configuration formed by an inclined surface or a curved surface; in short, it is formed with a view toward facilitating the application of coating materials when forming the conductive connection layer by dipping or spray coating. It may be formed by a mold when forming the through-hole or by cutting the hole-edge after the formation of the through-hole.

In the buffer member of the present invention, the buffer member main body has an L-shaped sectional configuration so that it may abut against and engage with the corner portion of the box-shaped external storage device; thus, when compared with the buffer member main body with a U-shaped sectional configuration mentioned above, there exists in the periphery a space allowing deformation when a vibration or shock is received, thus facilitating the deformation. Thus, it is possible to enhance the buffer effect. That is, in the buffer member main body with a U-shaped sectional configuration, the external storage device and the accommodating portion are intimate contact with the side surface support portion, which is interposed between the upper surface support portion and the bottom surface support portion, and there is no space available around the side surface support portion that allows deformation. Thus, the side surface support portion only exerts the buffer effect due to compression. According to the present invention, in contrast, the buffer member main body is formed by the upper surface support portion and the side surface support portion, or by the bottom surface support portion and the side surface support portion, so there exists a space also around the side surface support portion where it can be deformed like the upper surface support portion and the bottom surface support portion. Thus, with the buffer member main body having an L-shaped sectional configuration, it is possible to exert, in addition to the buffer effect due to compression, a buffer effect due to deformation, thus enhancing the buffer effect.

In the buffer member of the present invention, the corner portion of the buffer member main body is formed in a beveled configuration. As in the case of the hole edge of a through-hole mentioned above, it is difficult to form a conductive connection layer of a uniform thickness at a corner portion of a right angle or an acute angle, and such a conductive connection layer is liable to lead to unstable conduction or to suffer breakage with deformation of the buffer member main body. According to the present invention, in contrast, the corner portion is formed in a beveled configuration, so a conductive connection layer of a uniform thickness can be easily formed. Thus, the conduction through the conductive connection layer is stabilized, and the conductive connection layer is not easily broken if the buffer member main body is deformed, thus realizing reliable electrical connection.

In the buffer member of the present invention, the conductive connection layer is a coating layer that is deformed in conformity with deformation of the buffer member main body, so if the buffer member main body is deformed, the conductive connection layer is not easily peeled off from the surface of the buffer member main body. Thus, the conductive connection layer does not easily suffer breakage, thus making it possible to realize stable electrical connection.

Further, the conductive connection layer is a coating layer, and conductive connection layer covering the entire surface of the buffer member main body can be easily provided by dipping, etc. Further, since the conductive connection layer is a coating layer, the conductive connection layer does not depend on the configuration of the buffer member; it is possible to easily provide a conductive connection layer on the entire surface of the buffer member even when it has a complicated configuration, such as a U-shaped or an L-shaped sectional configuration. Since the buffer member main body is formed of a soft rubber-like elastic material, its surface is sticky, making it hard to handle. However, when the entire surface of the buffer member main body is covered with the conductive connection layer, the surface of the buffer member loses stickiness such as that of the surface of the buffer member main body and exhibits slipperiness. Thus, the buffer member is easy to handle, making it possible to enhance the workability when it is attached to the accommodating portion.

According to the buffer member of the present invention, static electricity with which the external storage device is charged and electromagnetic wave noise can be dissipated through the conductive connection layer to the accommodating portion or the casing of the information processing apparatus electrically continuous with the accommodating portion. Thus, it is possible to prevent a malfunction of the external storage device, making it possible to correctly operate the information processing apparatus such as a notebook PC.

Further, there is no need to provide any other conductive member, thereby making it possible to prevent an increase in the number of components. Thus, the external storage device can be easily incorporated into the accommodating portion.

Further, since the conductive connection layer provided on the surface of the buffer member main body can always be electrically connected to the conductive portion of the accommodating portion and the conductive portion of the external storage device, stable electrical connection is possible even when a vibration of shock is received.

The above description of this invention should not be construed restrictively; the advantages, features, and uses of this invention will become more apparent from the following description given with reference to the accompanying drawings. Further, it should be understood that all appropriate modifications made without departing from the gist of this invention are to be covered by the scope of this invention.

### BRIEF DESCRIPTION OF THE DRAWINGS

In the accompanying drawings:

Fig. 1 is an outward perspective view illustrating how buffer members according to a first embodiment of the present invention are attached to a hard disk drive;

Fig. 2 is a front view illustrating how the buffer members of the first embodiment are attached to the hard disk drive;

Fig. 3 is a schematic explanatory inside view of a mounting structure in which the buffer members of the first embodiment are attached to the hard disk drive and accommodated in an accommodating portion;

Fig. 4 is a perspective view of a buffer member according to a second embodiment of the present invention;

Fig. 5 is a schematic explanatory inside view of a mounting structure in which the buffer members of the second embodiment are attached to a hard disk drive and accommodated in an accommodating portion;

Figs. 6A and 6B show modifications of the buffer member of the second embodiment, of which Fig. 6A is a perspective view of a modification having through-holes in an upper surface support portion, and Fig. 6B is a perspective view of a modification having through-holes in a bottom surface support portion;

Fig. 7 is an outward perspective view illustrating how buffer members according to a third embodiment of the present invention are attached to a hard disk drive;

Fig. 8 is a front view illustrating how the buffer members of the third embodiment are attached to the hard disk drive;

Fig. 9 is a schematic explanatory inside view of a mounting structure in which the buffer members of the third embodiment are attached to the hard disk drive and accommodated in an accommodating portion;

Fig. 10 is an outward perspective view of a hard disk drive and a notebook PC, illustrating how conventional buffer members are attached; and

Fig. 11 is a schematic explanatory inside view of a mounting structure in which the conventional buffer members are attached to the hard disk drive and accommodated in an accommodating portion.

### DESCRIPTION OF THE PREFERRED EMBODIMENTS

In the following, embodiments of the present invention will be described with reference to the drawings. Throughout the drawings, the reference symbols indicate portions and components. While in the embodiments described below the present invention is applied to a hard disk drive 2 mounted in a notebook PC 1, the present invention is also applicable to a drive device for various disk media, such as an optical disk device; it is also applicable to other information processing apparatuses using an external storage device, such as a desktop personal computer, a car audio apparatus, a car navigation apparatus, a portable audio player, and a digital video camera. The components common to the embodiments are indicated by the same reference symbols, and a redundant description thereof will be omitted.

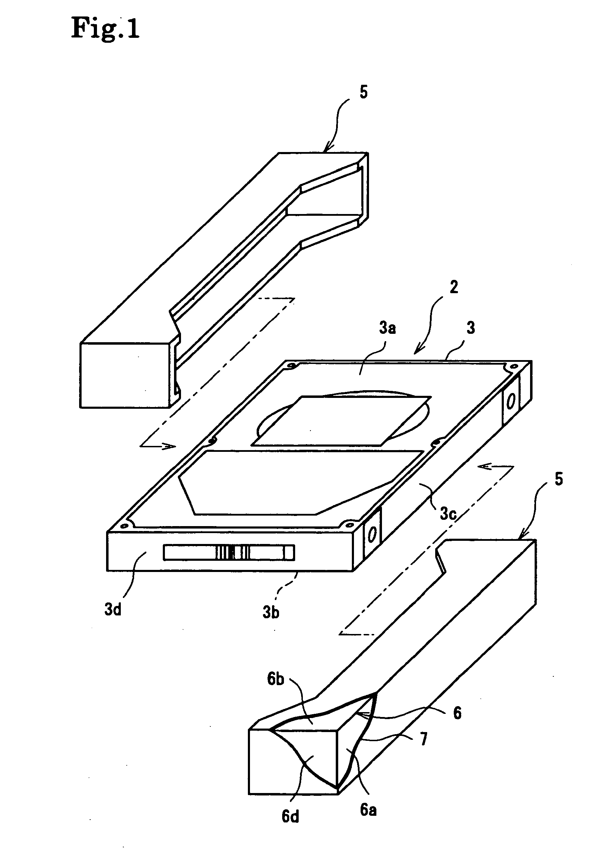

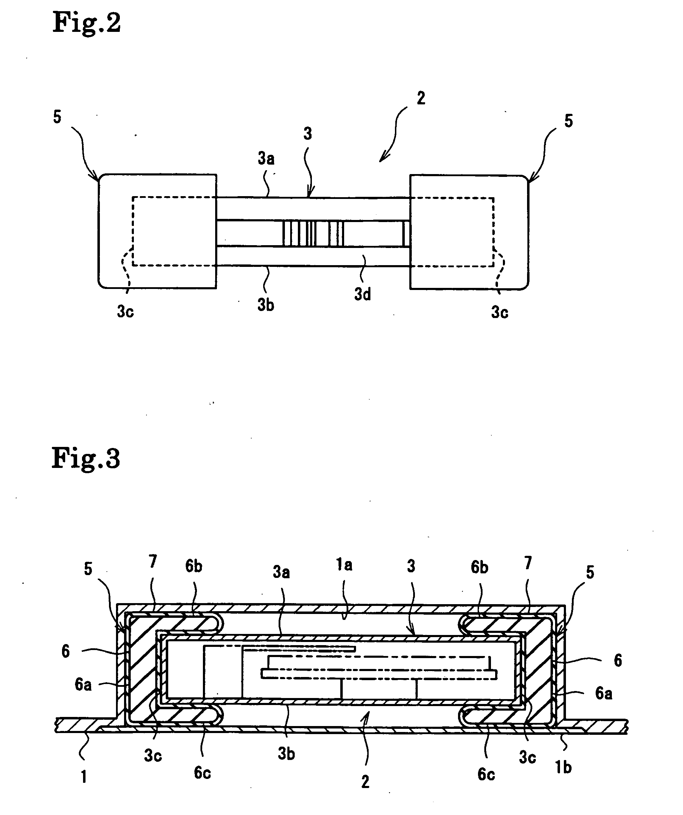

First Embodiment (Figs. 1 through 3): Figs. 1 through 3 show a buffer member 5 according to a first embodiment. The buffer member 5 of the first embodiment is composed of a buffer member main body 6 and a conductive connection layer 7; as shown in Fig. 1, it is attached to a longitudinal side surface 3c of a casing 3 of the hard disk drive 2.

The buffer member main body 6 is formed of a rubber-like elastic material; more specifically, the buffer member main body 6 of this embodiment is formed of thermoplastic elastomer, and still more specifically, of styrene-based thermoplastic elastomer. The buffer member main body 6 is composed of a side surface support portion 6a extending along the longitudinal side surface 3c of the casing 3 of the hard disk drive 2, an upper surface support portion 6b protruding from one end of the side surface support portion 6a to an upper surface 3a of the casing 3, and a bottom surface support portion 6c likewise protruding from the other end of the side surface support portion 6a to a bottom surface 3b of the casing 3, and is formed in a U-shaped sectional configuration. The upper surface support portion 6b and the bottom surface support portion 6c have the same thickness, and the forward end of each of them is formed in a substantially semi-circular, round beveled sectional configuration. Further, at both longitudinal ends thereof, there are provided holding portions 6d bent so as to extend along shorter side surfaces 3d of the casing 3 of the hard disk drive 2.

The conductive connection layer 7 is a coating layer formed by applying a conductive coating material; in this embodiment, it is formed of a coating material containing a polyester resin as the base material. It is fixed to the buffer member main body 6 so as to cover substantially the entire surface thereof.

Here, the material of each component of the buffer member 5 will be described. The following description also applies to the other embodiments described below.

The "rubber-like elastic material" of the buffer member main body 6 is formed of an elastic material whose hardness is JIS TYPE E10 through E50. According to the requisite performance such as dimensional precision, heat resistance, mechanical strength, durability, reliability, damping properties, and controllability, it is possible to use thermosetting rubber, etc. apart from the thermoplastic elastomer adopted for the buffer member main body 6 of this embodiment. When the hardness is lower than JIS TYPE E10, it is difficult to hold the external storage device in a stable manner; when it is higher than E50, the requisite vibration attenuating effect cannot be obtained, nor is it possible to buffer a shock. Apart from the styrene-based thermoplastic elastomer adopted for the buffer member main body 6 of this embodiment, examples of the thermoplastic elastomer that can be used include olefin-based thermoplastic elastomer, urethane-based thermoplastic elastomer, ester-based thermoplastic elastomer, and vinyl chloride-based thermoplastic elastomer. Examples of the thermosetting rubber that can be used include butyl rubber, acrylic rubber, urethane rubber, ethylene-propylene rubber, fluoro rubber, and silicone rubber. It is possible to add flame retardant, plasticizer, antistatic agent, lubricant, etc. to the rubber-like elastic material as mentioned above.

The conductive connection layer 7 is bonded to the buffer member main body 6; it is desirable for the conductive connection layer 7 to be formed of a base material containing a resin deformable in conformity with deformation of the buffer member main body 6. Apart from a polyester resin adopted in this embodiment, it is possible to use a polyurethane resin, a polyether resin, etc. Such a resin is used as a base material, in which conductive particles, such as nickel particles, copper particles, silver particles, or carbon black particles, are uniformly dispersed, thereby enhancing the conductivity of the material. In this embodiment, the conductive connection layer 7 is formed of a conductive coating material; when the resin constituting the base material of the coating material is one whose glass transition temperature is 40°C or lower, it is possible to enhance the conformability of the conductive connection layer with respect to deformation of the buffer member main body 6.

When producing the buffer member 5, constructed as described above, the buffer member main body 6 composed of styrene-based thermoplastic elastomer is first formed by injection molding. Next, the buffer member main body 6 is dipped in a conductive coating material containing a polyester resin as the base material to effect the coating so as to cover substantially the entire surface of the buffer member main body 6. Then, the conductive coating material applied is cured to form the conductive connection layer 7, whereby the buffer member 5 is obtained. Apart from the dipping mentioned above, it is also possible to adopt spray coating or the like as the means of forming the conductive connection layer 7 on the buffer member main body 6.

Next, to be described will be an embodiment of a mounting structure in which the buffer members 5 of the first embodiment are attached to the hard disk drive 2 and accommodated in an accommodating portion 1a. The buffer members 5 with a U-shaped sectional configuration are fitted onto both longitudinal side surfaces 3c of the hard disk drive 2, starting with the opening sides thereof, thereby attaching the buffer members 5 to the hard disk drive 2. After that, the hard disk drive 2 is accommodated in the accommodating portion 1a of the notebook PC 1. In this way, the hard disk drive 2 is accommodated in the accommodating portion 1a, and the buffer members 5 elastically support the hard disk drive 2 within the accommodating portion 1a.

Next, the effects of the buffer member 5 of this embodiment will be described.

According to the buffer member 5, the conductive connection layer 7 is held in contact with the hard disk drive 2 and the accommodating portion 1a, so static electricity with which the hard disk drive 2 is charged and electromagnetic wave noise can be dissipated through the conductive connection layer 7 to the exterior of the accommodating portion 1a or the casing of the notebook PC 1 electrically continuous with the accommodating portion 1a. Thus, it is possible to prevent malfunction of the hard disk drive 2, making it possible to correctly operate the notebook PC 1.

Further, since the hard disk drive 2 and the accommodating portion 1a are electrically continuous with each other through the conductive connection layer 7 provided on the surface of the buffer member main body 6, there is no need to separately provide a conductive member, thus making it possible to prevent an increase in the number of components. Thus, the hard disk drive 2 can be easily incorporated into the accommodating portion 1a.

The conductive connection layer 7 can always be electrically connected to the hard disk drive 2 and the accommodating portion 1a even if the hard disk drive 2 is displaced within the accommodating portion 1a upon receiving a vibration or shock. Thus, it is possible to effect stable electrical connection even when a vibration or shock is received.

The buffer member 5 has a U-shaped sectional configuration. Thus, by fitting its opening onto the box-shaped hard disk drive 2 from the side surface side thereof, the buffer member 5 can be attached to the hard disk drive 2 easily and reliably.

Since the forward ends of the upper surface support portion 6b and the bottom surface support portion 6c are formed in a substantially semi-circular, round beveled sectional configuration, it is possible to easily form the conductive connection layer 7 having a uniform thickness even by dipping. Thus, the conduction through the conductive connection layer 7 is stabilized, and even if the buffer member main body 6 is deformed, the conductive connection layer 7 is not easily broken, thus making it possible to realize reliable electrical connection.

Since the conductive connection layer 7 is deformed in conformity with deformation of the buffer member main body 6, the conductive connection layer 7 is not easily separated from the surface of the buffer member main body 6 even if the buffer member main body 6 is deformed. Thus, the conductive connection layer 7 is not easily broken, making it possible to realize stable electrical connection.

Since the conductive connection layer 7 is fixed so as to cover substantially the entire surface of the buffer member main body 6, the buffer member main body 6 of the buffer member 5 exhibits no stickiness and can be made slippery. Thus, the buffer member 5 is easy to handle, and it is possible to enhance the workability when mounting the buffer member 5 in the accommodating portion 1a.

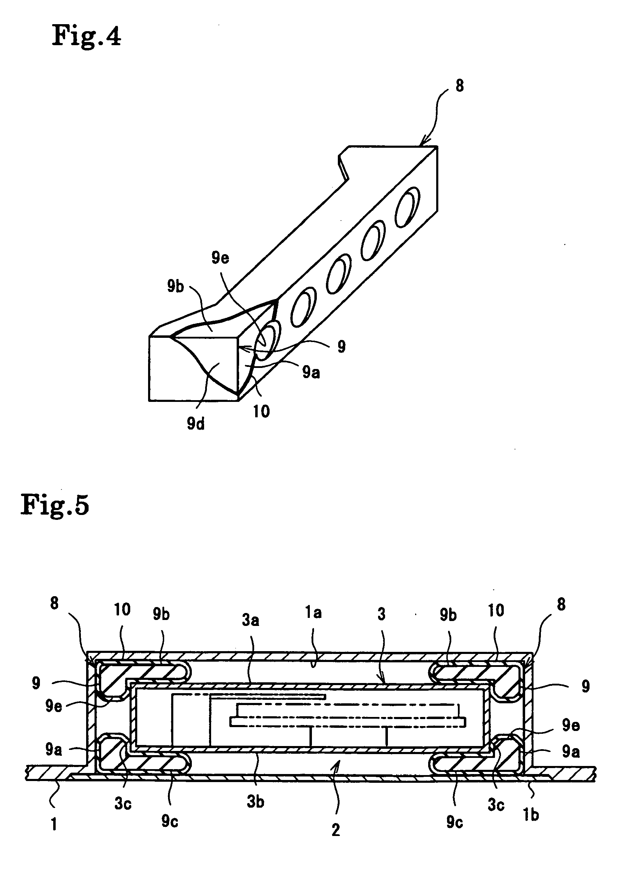

Second Embodiment (Figs. 4 and 5): Figs. 4 and 5 show a buffer member 8 according to a second embodiment. The buffer member 8 of the second embodiment differs from the buffer member 5 of the first embodiment in construction of a buffer member main body 9 and a conductive connection layer 10. Otherwise, it is of the same construction and effects as the first embodiment.

Like the buffer member main body 6 of the first embodiment, the buffer member main body 9 is formed of a rubber-like elastic material containing styrene-based thermoplastic elastomer, and is composed of a side surface support portion 9a, an upper surface support portion 9b, and a bottom surface support portion 9c to exhibit a U-shaped sectional configuration. Also at both longitudinal ends thereof, there are provided holding portions 9d bent so as to extend along the shorter side surfaces 3d of the casing 3 of the hard disk drive 2. In the second embodiment, however, the side surface support portion 9a has five through-holes 9e extending through the thickness thereof. The hole edges of the through-holes 9e are formed in a round beveled configuration including an inclined surface (Fig. 5).

Like the conductive connection layer 7 of the first embodiment, the conductive connection layer 10 is the coating layer formed of the conductive coating material using a polyester resin as the base material. The conductive connection layer 10 covers substantially the entire surface of the buffer member main body 9, and is fixed thereto including the hole wall surfaces of the through-holes 9e.

As in the case of the buffer member 5 of the first embodiment, in order to produce the buffer member 8 as described above, the buffer member main body 9 is first formed by injection molding; at this time, the through-holes 9e are also formed. Next, the buffer member main body 9 is dipped in the conductive coating material to apply the conductive coating material thereto so as to cover substantially the entire surface of the buffer member main body 9, and then the conductive coating material applied is cured to form the conductive connection layer 10, whereby the buffer member 8 is obtained.

Next, to be described will be an embodiment of a mounting structure in which the buffer member 8 of the second embodiment is attached to the hard disk drive 2 and accommodated in the accommodating portion 1a. As in the case of the buffer members 5 of the first embodiment, the buffer members 8 with a U-shaped sectional configuration are fitted, starting with their opening sides, onto both longitudinal side surfaces 3c of the hard disk drive 2 for engagement to thereby attach the buffer members 8 to the hard disk drive 2. After that, the hard disk drive 2 is accommodated in the accommodating portion 1a of the notebook PC 1. In this way, the hard disk drive 2 is contained in the accommodating portion 1a, and the buffer members 8 elastically support the hard disk drive 2 within the accommodating portion 1a.

The buffer member 8 of the second embodiment provides the same effects as the buffer member 5 of the first embodiment. Further, it provides the following effects.

In the buffer member 8, when compressed due to vibration or shock, the buffer member main body 9 can be deformed so as to crush the through-holes 9e. Thus, in addition to the buffer effect due to compression, it can also exert a buffer effect due to deformation, thereby enhancing the buffer effect.

Since the conductive connection layer 10 is also fixed to the hole wall surfaces of the through-holes 9e, the conduction path connecting the hard disk drive 2 and the accommodating portion 1a is shortened, making it possible to achieve a reduction in conduction resistance. Thus, static electricity with which the hard disk drive 2 is charged and electromagnetic wave noise can be easily dissipated. Further, since the five through-holes 9e are formed, a plurality of conduction paths are shortened, so defective conduction due to lack of the conductive connection layer 10 does not easily occur. Thus, it is possible to enhance the reliability in electrical connection between the hard disk drive 2 and the accommodating portion 1a.

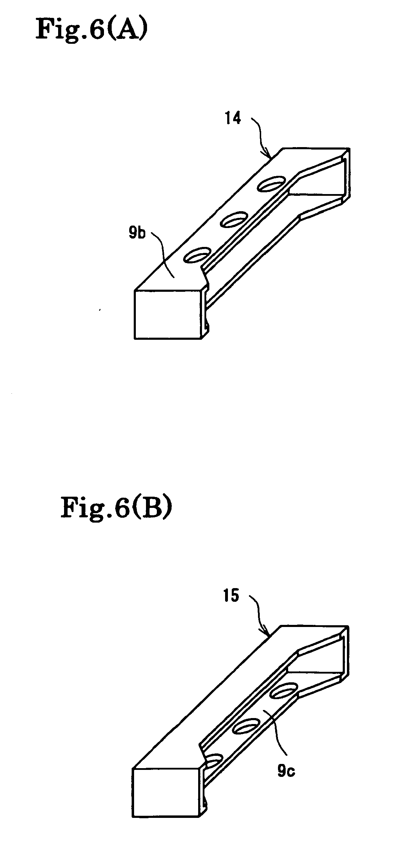

Modification of the Second Embodiment (Fig. 6): While in the buffer member 8 of the second embodiment the through-holes 9e are provided in the side surface support portion 9a, a buffer member 14 according to a first modification may have, for example, three through-holes 9e in the upper surface support portion 9b as shown in Fig. 6A, and a buffer member 15 according to a second modification may have, for example, three through-holes 9e in the bottom surface support portion 9c as shown in Fig. 6B. Those modifications can also provide the same effects as the second embodiment.

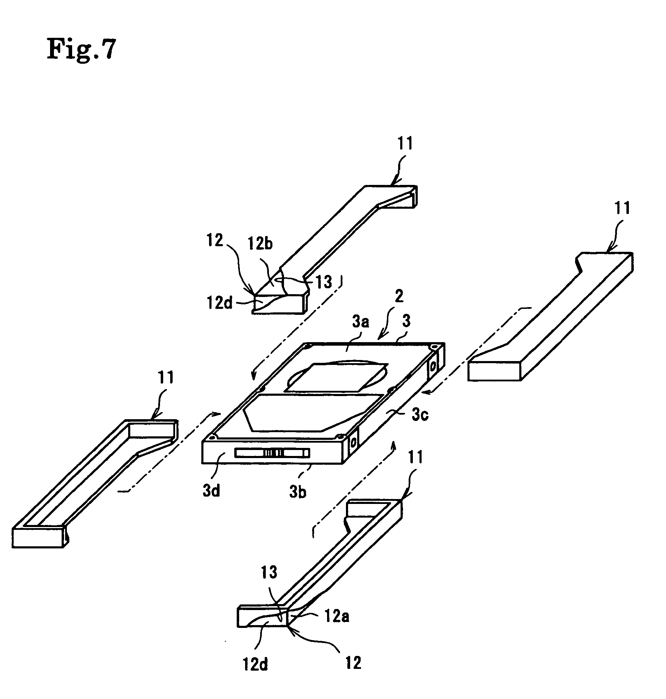

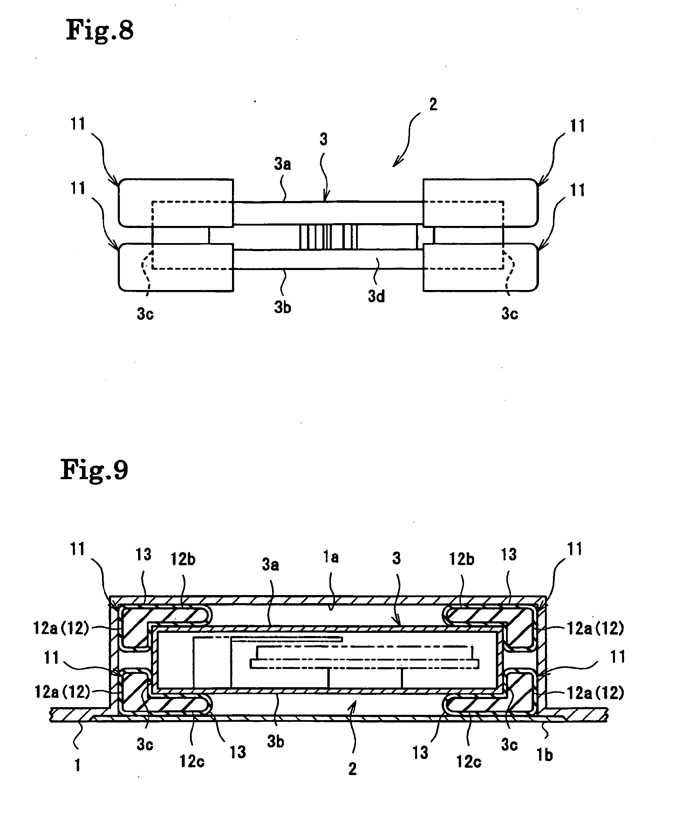

Third Embodiment (Figs. 7 through 9): Figs. 7 through 9 show a buffer member 11 according to a third embodiment. The buffer member 11 of the third embodiment differs from the buffer member 5 of the first embodiment in construction of a buffer member main body 12 and a conductive connection layer 13. Otherwise, it is of the same construction and effects as the first embodiment.

Like the buffer member main body 6 of the first embodiment, the buffer member main body 12 is formed of a rubber-like elastic material formed of styrene-based thermoplastic elastomer. However, it has an L-shaped sectional configuration, and is held in contact and engaged with corner portions of the hard disk drive 2. That is, for the corner portions formed by the longitudinal side surfaces 3c and the upper surface 3a of the casing 3, the buffer member main body 12 is formed by a side surface support portion 12a and an upper surface support portion 12b, and for the corner portion formed by the longitudinal side surface 3c and the bottom surface 3b of the casing 3, it is formed by the side surface support portion 12a and a bottom surface support portion 12c. The forward end portions of the side surface support portion 12a, the upper surface support portion 12b, and the bottom surface support portion 12c are formed in a substantially semi-circular, round beveled sectional configuration. Further, at both longitudinal ends of each buffer member main body 12, there are provided holding portions 12d that are bent so as to extend along the shorter side surfaces 3d of the casing 3 of the hard disk drive 2.

Like the conductive connection layer 7 of the first embodiment, the conductive connection layer 13 is the coating layer formed of the conductive coating material containing a polyester resin as the base material, and is fixed to the buffer member main body 12 so as to cover substantially the entire surface thereof.

As in the case of the buffer member 5 of the first embodiment, in order to produce the buffer member 11 constructed as described above, the buffer member main body 12 is first formed by injection molding. Next, the buffer member main body 12 is dipped in the conductive coating material to apply the conductive coating material thereto so as to cover substantially the entire surface of the buffer member main body 12, and then the conductive coating material applied is cured to form the conductive connection layer 13, whereby the buffer member 11 is obtained.

Next, to be described will be an embodiment of a mounting structure in which the buffer member 11 of the second embodiment is attached to the hard disk drive 2 and accommodated in the accommodating portion 1a. The buffer members 11 with an L-shaped sectional configuration are engaged with the two corner portions formed by the longitudinal side surfaces 3c and the upper surface 3a of the hard disk drive 2. Further, the buffer members 11 with an L-shaped sectional configuration are engaged with the two corner portions formed by the longitudinal side surfaces 3c and the bottom surface 3b. After that, the hard disk drive 2 is accommodated in the accommodating portion 1a of the notebook PC 1. In this way, the hard disk drive 2 is accommodated in the accommodating portion 1a, and the four buffer members 11 elastically support the hard disk drive 2 within the accommodating portion 1a.

The buffer member 11 of the third embodiment provides the same effects as the buffer member 5 of the first embodiment. Further, it provides the following effect.

Since the buffer member 11 is formed by the side surface support portion 12a and the upper surface support portion 12b or by the side surface support portion 12a and the bottom surface support portion 12c, a space that allows deformation like the upper surface support portion 12b and the bottom surface support portion 12c also exists around the side surface support portion 12a. Thus, in the buffer member 11 with an L-shaped sectional configuration, it is possible to exert, in addition to the buffer effect due to compression, a buffer effect due to deformation, thereby enhancing the buffer effect.

Modification Common to the Embodiments: While in the above embodiments the holding portions 6d, 9d, 12d are provided at the longitudinal ends of the buffer members 5, 8, 11, respectively, it is also possible to adopt a gullet-like configuration.

### Examples

Next, the buffer effect of the present invention will be described with reference to specific examples, which should not be construed restrictively.

1. Manufacture of the Buffer Member

Example 1: First, the buffer member main body 6 of styrene-based thermoplastic elastomer was formed by injection molding. The buffer member main body 6 is configured to have the side surface support portion 6a extending along the longitudinal side surface 3c of the casing 3 of the hard disk drive 2, the upper surface support portion 6b protruding from one end of the side surface support portion 6a to the upper surface 3a of the casing 3, and the bottom surface support portion 6c protruding likewise from the other end of the side surface support portion 6a to the bottom surface 3b, and exhibits a U-shaped sectional configuration. Further, at both longitudinal ends, there are provided the holding portions 6d bent so as to extend along the shorter side surfaces 3d of the casing 3 of the hard disk drive 2. Next, the buffer member main body 6 was dipped in a conductive coating material prepared by mixing a silver filler with a polyester resin used as the base material, and the conductive coating material was applied so as to cover the entire surface of the buffer member main body 6; after that, the conductive coating material applied was cured to form the conductive connection layer 7, whereby the buffer member 5 was obtained.

Example 2: As in the case of the buffer member main body 6 of Example 1, the buffer member main body 9 was formed of a rubber-like elastic material composed of styrene-based thermoplastic elastomer, the buffer member main body 9 having the side surface support portion 9a, the upper surface support portion 9b, the bottom surface support portion 9c, and the holding portions 9d and exhibiting a U-shaped sectional configuration. In Example 2, however, the side surface support portion 9a has the five through-holes 9e extending through the thickness thereof. Next, as in Example 1, the buffer member main body 9 was dipped in the conductive coating material prepared by mixing a silver filler with a polyester resin used as the base material, and the conductive coating material was applied so as to cover the entire surface of the buffer member main body 9 including the hole wall surfaces of the through-holes 9e. After that, the conductive coating material applied was cured to form the conductive connection layer 10, whereby the buffer member 8 was obtained.

2. Evaluation of the Buffer Members for Shock Absorption

Shock absorption evaluation was performed on the buffer members as follows. First, the buffer member 5, 8 of each example was attached to the longitudinal side surface 3c of the casing 3 of the hard disk drive (HDD) 2, and an acceleration pick-up was attached. Next, the HDD 2 with the buffer member 5, 8 attached thereto was accommodated in a box-shaped jig of an ABS resin likened to the accommodating portion 1a and a cover 1b of the notebook PC 1. Then, that box-shaped jig was attached to the arm of a drop tester, and was dropped vertically from a height of 1 m onto a concrete collision surface while maintaining the attitude of the box-shaped jig by using the arm to measure a shock value generated at the time of collision. In this case, the arm of the drop tester is capable of keeping the box-shaped jig in a fixed attitude until immediately before collision. At the time of collision, the arm of the drop tester can release the box-shaped jig, thus making it possible to prevent the box-shaped jig from undergoing a change in attitude during the dropping thereof and colliding with the collision surface with a corner portion thereof down. Table 1 shows results of the evaluation. An X-direction is a direction in which the shorter side surface 3d side of the casing 3 drops to collide, a Y-direction is a direction in which the longitudinal side surface 3c side of the casing 3 drops to collide, and a Z-direction is a direction in which the upper surface 3a side thereof drops to collide.

As can be seen from the table, as compared with the buffer member 5 of Example 1, in the buffer member 8 of Example 2, in which the through-holes 9e are provided in the side surface support portion 9a, the shock value in the Y-direction, in which the side surface support portion 9a is compressed, is suppressed to a lower level. It is assumed that this is due to the fact that when the buffer member 8 receives a shock in the Y-direction, the compressed buffer member main body 9 is deformed so as to crush the through-holes 9e, thus exerting, in addition to the buffer effect due to compression, a buffer effect due to deformation.

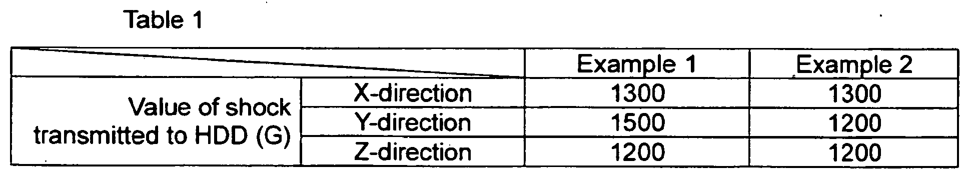

## Claims

1. A buffer member (5, 8, 11, 14, 15) for elastically supporting a box-shaped external storage device (2) accommodated in an accommodating portion (1a) of an information processing apparatus (1), comprising:
a buffer member main body (6, 9, 12); and
a conductive connection layer (7, 10, 13) held in contact with a conductive portion of the external storage device (2) and with a conductive portion of the accommodating portion to effect electrical connection, which is provided on a surface of the buffer member main body (6,9,12); **characterized by**
a through-hole (9e) extending through a thickness of a side surface support portion (9a) of the buffer member main body (9), and
the conductive connection layer (7,10,13) is also fixed to the hole wall surfaces of the through-hole (9e).

2. A buffer member (5,8,11,14,15) for elastically supporting a box-shaped external storage device (2) accommodated in an accommodation portion (1a) of an information processing apparatus (1), comprising:
a buffer member main body (6,9,12); and
a conductive layer (7,10,13) held in contact with a conductive portion of the external storage device (2) and with a conductive portion of the accommodating portion to effect electrical connection, which is provided on a surface of the buffer member main body (6,9,12); **characterized by**
a through-hole (9e) extending through a thickness of an upper surface support portion (9b) of the buffer member main body (9), and
the conductive connection layer (7,10,13) is also fixed to the hole wall surfaces of the through-hole (9e).

3. A buffer member (5,8,11,14,15) for elastically supporting a box-shaped external storage device (2) accommodated in an accommodating portion (1a) of an information processing apparatus (1), comprising:
a buffer member main body (6,9,12); and
a conductive connection layer (7,10,13) held in contact with a conductive portion of the external storage device (2) and with a conductive portion of the accommodating portion to effect electrical connection, which is provided on a surface of the buffer member main body (6,9,12); **characterized by**
a through-hole (9e) extending through a thickness of a bottom surface support portion (9c) of the buffer member main body (9), and
the conductive connection layer (9,10,13) is also fixed to the hole wall surfaces of the through-hole (9e).

4. A buffer member (5,8,14,15) according to any one of claims 1 to 3, wherein the buffer member main body (6,9,12) has an upper surface support portion (6b,9b,12b), a side surface support portion (6a,9a,12a), and a bottom surface support portion (6c,9c,12c) for elastically supporting an upper surface side, a side surface side, and a bottom surface side of the external storage device (2), respectively, and exhibits a U-shaped sectional configuration.

5. A buffer member (11) according to any one of claims 1 to 3, wherein the buffer member main body (6,9,12) has an L-shaped sectional configuration abutting against and engaging with a corner portion of the box-shaped external storage device (2).

6. A buffer member (8,14,15) according to any one of claims 1 to 5, wherein the through-hole (9e) has a hole edge formed in a bevelled configuration.

7. A buffer member (5,8,11,14,15) according to any one of claims 1 to 6, wherein the buffer member main body (6,9,12) has a corner portion formed in a bevelled configuration.

8. A buffer member (6,8,11,14,15) according to any one of claims 1 to 7, wherein the conductive connection layer (7,10,13) is a coating layer deformable in conformity with deformation of the buffer member main body (6,9,12).

## Patentansprüche

1. Pufferelement (5,8,11,14,15) zum elastischen Abstützen eines kastenförmigen Speichergeräts (2), welches in einem Aufnahmebereich (1a) einer Informationsverarbeitungsvorrichtung (1) aufgenommen ist, mit folgenden Merkmalen:
einem Pufferelementhauptkörper (6,9,12); und einer leitfähigen Verbindungsschicht (7,10,13), welche in Kontakt mit einem leitfähigen Abschnitt des externen Steuergeräts (2) und mit einem leitfähigen Abschnitt des Aufnahmebereichs gehalten ist, um eine elektrische Verbindung zu bewirken, welche auf einer Oberfläche des Pufferelementhauptkörpers (6,9,12) vorgesehen ist;
**gekennzeichnet durch**
eine Durchgangsbohrung (9e), welche sich **durch** eine Dicke eines seitlichen Oberflächenabstützbereichs (9a) des Pufferelementhauptkörpers (9) erstreckt, und
die leitfähige Verbindungsschicht (7,10,13) auch an der Oberfläche der Bohrungswand der Durchgangsbohrung (9e) angebracht ist.

2. Pufferelement (5,8,11,14,15) zum elastischen Abstützen eines kastenförmigen Speichergeräts (2), welches in einem Aufnahmebereich (1a) einer Informationsverarbeitungsvorrichtung (1) aufgenommen ist, mit folgenden Merkmalen:
einem Pufferelementhauptkörper (6,9,12); und einer leitfähigen Schicht (7,10,13), welche in Kontakt mit einem leitfähigen Abschnitt des externen Steuergeräts (2) und mit einem leitfähigen Abschnitt des Aufnahmebereichs gehalten ist, um eine elektrische Verbindung zu bewirken, welche auf einer Oberfläche des Pufferelementhauptkörpers (6,9,12) vorgesehen ist;
**gekennzeichnet durch**
eine Durchgangsbohrung (9e), welche sich **durch** eine Dicke eines oberen Oberflächenabstützbereichs (9b) des Pufferelementhauptkörpers (9) erstreckt, und
die leitfähige Verbindungsschicht (7,10,13) auch an der Oberfläche der Bohrungswand der Durchgangsbohrung (9e) angebracht ist.

3. Pufferelement (5,8,11,14,15) zum elastischen Abstützen eines kastenförmigen Speichergeräts (2), welches in einem Aufnahmebereich (1a) einer Informationsverarbeitungsvorrichtung (1) aufgenommen ist, mit folgenden Merkmalen:
einem Pufferelementhauptkörper (6,9,12); und einer leitfähigen Verbindungsschicht (7,10,13), welche in Kontakt mit einem leitfähigen Abschnitt des externen Steuergeräts (2) und mit einem leitfähigen Abschnitt des Aufnahmebereichs gehalten ist, um eine elektrische Verbindung zu bewirken, welche auf einer Oberfläche des Pufferelementhauptkörpers (6,9,12) vorgesehen ist;
**gekennzeichnet durch**
eine Durchgangsbohrung (9e), welche sich **durch** eine Dicke eines unteren Oberflächenabstützbereichs (9c) des Pufferelementhauptkörpers (9) erstreckt, und
die leitfähige Verbindungsschicht (7,10,13) auch an der Oberfläche der Bohrungswand der Durchgangsbohrung (9e) angebracht ist.

4. Pufferelement (5,8,14,15) nach einem der Ansprüche 1 bis 3, wobei der Pufferelementhauptkörper (6,9,12) einen oberen Flächenabstützbereich (6b,9b,12b), einen seitlichen Flächenabstützbereich (6a,9a,12a) und einen unteren Flächenabstützbereich (6c,9c,12c) zum elastischen Abstützen einer oberen Oberflächenseite, einer seitlichen Oberflächenseite bzw. einer unteren Oberflächenseite des externen Speichergerätes (2) aufweist und mit einem U-förmigen Querschnitt ausgeführt ist.

5. Pufferelement (11) nach einem der Ansprüche 1 bis 3, wobei der Pufferelementhauptkörper (6,9,12) einen L-förmigen Querschnitt aufweist, welcher an einem Randabschnitt des kastenförmigen externen Speichergeräts (2) anschlägt und mit demselben in Eingriff ist.

6. Pufferelement (8,14,15) nach einem der Ansprüche 1 bis 5, wobei die Durchgangsbohrung (9e) einen in einer konischen Form ausgebildeten Bohrungsrand aufweist.

7. Pufferelement (5,8,11,14,15) nach einem der Ansprüche 1 bis 6, wobei der Pufferelementhauptkörper (6,9,12) einen in einer konischen Konfiguration ausgebildeten Randbereich aufweist.

8. Pufferelement (6,8,11,14,15) nach einem der Ansprüche 1 bis 7, wobei die leitfähige Verbindungsschicht (7,10,13) eine gemäß der Deformation des Pufferelementhauptkörpers (6,9,12) verformbare Beschichtungsschicht ist.

## Revendications

1. Elément tampon (5, 8, 11, 14, 15) pour supporter élastiquement un dispositif de stockage externe en forme de boîte (2) logé dans une partie de logement (1a) d'un appareil de traitement d'informations (1) comprenant :
un corps principal (6, 9, 12) d'élément tampon; et
une couche de connexion conductrice (7, 10, 13) maintenue en contact avec une partie conductrice du dispositif de stockage externe (2) et une partie conductrice de la partie de logement pour effectuer une connexion électrique qui est disposée sur une surface du corps principal (6, 9, 12) de l'élément tampon, **caractérisé par**
un trou débouchant (9e) qui s'étend à travers une épaisseur d'une portion de surface de support latérale (9a) du corps principal (9) de l'élément tampon, et
la couche de connexion conductrice (7, 10, 13) qui est aussi fixée aux surfaces des parois du trou débouchant (9e).

2. Elément tampon (5, 8, 11, 14, 15) pour supporter élastiquement un dispositif de stockage externe en forme de boîte (2) logé dans une partie de logement (1a) d'un appareil de traitement d'informations (1) comprenant :
un corps principal (6, 9, 12) d'élément tampon, et
une couche conductrice (7, 10, 13) maintenue en contact avec une partie conductrice du dispositif de stockage externe (2) et avec une partie conductrice de la partie de logement pour effectuer une connexion électrique qui est disposée sur une surface du corps principal (6, 9, 12) de l'élément tampon, **caractérisé par**
un trou débouchant (9e) qui s'étend à travers une épaisseur d'une portion de surface de support supérieure (9b) du corps principal (9) de l'élément tampon, et
la couche de connexion conductrice (7, 10, 13) qui est aussi fixée aux surfaces des parois du trou débouchant (9e).

3. Elément tampon (5, 8, 11, 14, 15) pour supporter élastiquement un dispositif de stockage externe en forme de boîte (2) logé dans une partie de logement (1a) d'un appareil de traitement d'informations (1) comprenant :
un corps principal (6, 9, 12) d'élément tampon; et
une couche de connexion conductrice (7, 10, 13) maintenue en contact avec une partie conductrice du dispositif de stockage externe (2) et avec une partie conductrice de la partie de logement pour effectuer une connexion électrique qui est disposée sur une surface du corps principal (6, 9, 12) de l'élément tampon, **caractérisé par**
un trou débouchant (9e) qui s'étend à travers une épaisseur d'une portion de surface de support de fond (9c) du corps principal (9) de l'élément tampon, et
la couche de connexion conductrice (7, 10, 13) qui est aussi fixée aux surfaces des parois du trou débouchant (9e).

4. Elément tampon (5, 8, 14, 15) selon l'une quelconque des revendications 1 à 3, dans lequel le corps principal (6, 9, 12) d'élément tampon comporte une partie de surface de support supérieure (6b, 9b, 12b), une partie de surface de support latérale (6a, 9a, 12a) et une partie de surface de support de fond (6c, 9c, 12c) pour supporter élastiquement, respectivement, un bord de surface supérieure, un bord de surface latérale et bord de surface de fond du dispositif de stockage externe (2), et présente en coupe une configuration en forme de U.

5. Elément tampon (11) selon l'une quelconque des revendications 1 à 3, dans lequel le corps principal (6, 9, 12) d'élément tampon présente, en coupe, une configuration en forme de L en butée contre et en prise avec un coin du dispositif de stockage externe en forme de boîte (2).

6. Elément tampon (8, 14, 15) selon l'une quelconque des revendications 1 à 5, dans lequel le trou débouchant (9e) a un bord de trou présentant une configuration en biseau.

7. Elément tampon (5, 8, 11, 14, 15) selon l'une quelconque des revendications 1 à 6, dans lequel le corps principal (6, 9, 12) de l'élément tampon a un coin présentant une configuration en biseau.

8. Elément tampon (6, 8, 11, 14, 15) selon l'une quelconque des revendications 1 à 7, dans lequel la couche de connexion conductrice (7, 10, 13) est une couche de revêtement déformable en accord avec la déformation du corps principal (6, 9, 12) de l'élément tampon.
